# EUROPEAN PATENT SPECIFICATION

(11) **EP 4 240 166 B1**
(45) Date of publication and mention of the grant of the patent: **18.09.2024**
(21) Application number: 21806699.1
(22) Date of filing: 05.11.2021
(51) Int. Cl.: A01N 65/12, A01N 25/08, A01N 25/22, A01P 7/04

(54) **PHOTOSTABLE COMPOSITION**
PHOTOSTABILE ZUSAMMENSETZUNG
COMPOSITION PHOTOSTABLE

(30) Priority: 06.11.2020 IT 202000026575
(43) Date of publication of application: 13.09.2023
(73) Proprietor: NDG Natural Development Group S.r.l., 40013 Castel Maggiore (BO) (IT)
(72) Inventor: CECCOBELLI, Liso, 51017 Pescia (PT) (IT); MANFREDINI, Gianluca, 40013 Castel Maggiore (BO) (IT); MANFREDINI, Stefania, 40013 Castel Maggiore (BO) (IT)
(74) Representative: Valenza, Silvia
(86) International application number: PCT/EP2021/080707
(87) International publication number: WO 2022/096617

(56) References cited:
- WO-A1-2015/075644
- WO-A1-2016/185379
- WO-A1-2017/202663
- MAINA ESTHER ET AL: "Natural Pyrethrum Extracts Photo-stabilized with Organo Clays", vol. 9, no. 7, 16 December 2015 (2015-12-16), pages 1 - 20, XP055812581, Retrieved from the Internet <URL:http://ir.jkuat.ac.ke/bitstream/handle/123456789/2179/Maina%2C%20Esther%20Wamaitha-Msc.%20Chemistry-2016-1.pdf?sequence=1&isAllowed=y> DOI: 10.9734/JSRR/2016/22433
- FERNÁNDEZ-PÉREZ MANUEL ET AL: "Lignin and Lignosulfonate-Based Formulations To Protect Pyrethrins against Photodegradation and Volatilization", vol. 53, no. 35, 3 September 2014 (2014-09-03), pages 13557 - 13564, XP055812613, ISSN: 0888-5885, Retrieved from the Internet <URL:https://pubs.acs.org/doi/pdf/10.1021/ie500186e> DOI: 10.1021/ie500186e
- IZURU YAMAMOTO ET AL: "Preparation, Stabilization, and Insecticidal Activity of Cyclodextrin-Inclusion Compounds of Pyrethroids", JOURNAL OF PESTICIDE SCIENCE, vol. 1, no. 1, 1 January 1976 (1976-01-01), TOKYO, JAPAN, pages 41 - 48, XP055280296, ISSN: 1348-589X, DOI: 10.1584/jpestics.1.41

## Description

### FIELD OF THE INVENTION

The present invention relates to novel photostable compositions of carbonate-substituted hydroxyapatite containing at least one vegetable extract of at least one plant of the Chrysanthemum or Tanacetum genus.

### BACKGROUND

In agriculture pesticides are largely used to preserve the plants from suffering different diseases caused by fungi, bacteria, and insect attack. On the other hand more and more attention has been devoted to the use of pesticides, taking different approaches such as the use of formulations containing less pesticides but with the aim to reach the plant target sites and the insects in well defined way.

In such a sense, microencapsulated formulations have been developed, able to release lower amounts of pesticides in the environment by contributing to minimize the consequent eco-toxicological impact. At the same time, more and more attention has been paid to the use of natural products as bioactive products with pesticide activity but able to be easily degraded in the environment so as to minimize or eliminate the environmental pollution. In this regard, indeed, the use of plant extracts as pesticides is well known in literature (IN20161108872, US20150086656, Alves Thiago J. Econom. Entomology (2019), 112(1),164-172, Kalemba D. Molecules (2020), 25(19, 59).

A possible natural insecticide without the drawbacks represented by the synthetic insecticides, is for example represented by the vegetable extract of at least one plant of the Chrysanthemum or Tanacetum genus, in particular pyrethrum extract and its components such as pyrethrins. These compounds possess a high insecticide activity (Katsuda), low residual power and are practically non toxic for mammals (Satelle and Yamamoto). Nevertheless pyrethrum extract and its components (pyrethrins) are photodegradable (Biebel) and suffer volatility, which limit their uses in agriculture. Different technologies have been described to provide enhanced UV protection of pyrethrum extract, such as complexation in cyclodextrins able to protect pyrethrum extract (Biebel and Szente), formulations based on lignin and lignin-sulfonate (Fernandez-Perez, Ind Eng Chem Res 2014, 53, 13557-13564), formulations based on montmorillonite clays (Maina, J Sci Res Rep 2015, 9, 1-20), or by using UV protection agents such as benzophenones and benzotriazoles (EP 713647) These formulations suffer, however, of severe limitations represented by the complexation process in case of cyclodextrins, or by the presence of synthetic photoprotectors.

The Applicant has therefore felt the need for a product capable of providing a photostable pesticide action based on natural products overcoming the drawbacks of the prior art.

### SUMMARY OF INVENTION

The present invention, therefore, in a first aspect refers to a photostable composition comprising:
a carbonate substituted hydroxyapatite having the formula (I):

   Ca_{(10-y/2)}(PO₄)_{(6-y)}(CO₃)_{y}(OH)₂ (I)
wherein y is comprised between 0.01 and 2; and
at least one vegetable extract of at least one plant of the Chrysanthemum or Tanacetum genus.

The Applicant has indeed advantageously found out that the carbonate substituted hydroxyapatite of formula (I) above improves the photostabilization of vegetable extracts of plants of the Chrysanthemum or Tanacetum genus, and in particular of pyrethrum extract as well as of pyrethrins formulations, giving them a photostability of some days compared with the considerably shorter photostability of said extracts by themselves without using any synthetic UV photoprotector such as benzophenones, benzotriazoles and hindered amines.

The Applicant has also advantageously found out that the carbonate substituted hydroxyapatite of formula (I) above provides also a beneficial fertilizing effect on the plants treated with the photostable composition according to the invention, thus reducing the need thereof of being fertilized with separate treatments.

Also, as the excessive use of fertilizers created environmental concerns linked to the accumulation and undesided presence of fertilizers in soil and fresh waters, the Applicant felt that the carbonate substituted hydroxyapatite of formula (I) above, being by itself of natural origin, actively contributed therefore to additionally limit the enviromental impact connected with the cultivation of the treated plants.

In a further aspect, the present invention relates also to a photostable composition comprising a carbonate substituted hydroxyapatite having the formula (I):

Ca_{(10-y/2)}(PO₄)_{(6-y)}(CO₃)_{y}(OH)₂ (I)

wherein y is comprised between 0.01 and 2; and
at least one active component selected from the group consisting of: pyrethrin I, pyrethrin II, cinerine I, cinerine II, jasmoline I, orjasmoline II.

The advantages of the photostable composition according to this further aspect have been already outlined with reference to the above photostable composition according to the first aspect of the invention and are not repeated herewith. In this regard, the Applicant has additionally found out that the carbonate substituted hydroxyapatite of formula (I) above is particularly and even more markedly effective in photostabilizing active components selected from the group consisting of: pyrethrin I, pyrethrin II, cinerine I, cinerine II, jasmoline I, or jasmoline II, capable of providing an insecticide activity on plants.

In further aspects, the present invention relates also to a non-therapeutic use of any one of the photostable compositions according to the invention, as insecticide or antibacterial in closed or open environment, and to a method for controlling insects or bacteria, comprising the step of treating a substrate requiring treatment with any one of the photostable compositions according to the invention.

The advantages of this non-therapeutic use and of this method have been already outlined with reference to and are apparent considering the above photostable composition according to the first aspect of the invention and are not repeated herewith.

### DETAILED DESCRIPTION OF THE INVENTION

The present invention, therefore, in a first aspect refers to a photostable composition comprising:
a carbonate substituted hydroxyapatite having the formula (I):

   Ca_{(10-y/2)}(PO₄)_{(6-y)}(CO₃)_{y}(OH)₂ (I)
wherein y is comprised between 0.01 and 2; and
at least one vegetable extract of at least one plant of the Chrysanthemum or Tanacetum genus.

The Applicant has indeed advantageously found out that the carbonate substituted hydroxyapatite of formula (I) above improves the photostabilization of vegetable extracts of plants of the Chrysanthemum or Tanacetum genus, and particular of pyrethrum extract as well as to the pyrethrins formulations, giving a photostability of some days compared with the considerably shorter photostability of the extract by itself without using any photoprotector such as benzophenones , benzotriazoles and hindered amines.

The Applicant has also advantageously found out that the carbonate substituted hydroxyapatite of formula (I) above provides also a beneficial fertilizing effect on the plants treated with the photostable composition according to the invention.

Also, as the excessive use of fertilizers created environmental concerns linked to the accumulation and undesided presence of fertilizers in soil and fresh waters, the Applicant felt that the carbonate substituted hydroxyapatite of formula (I) above in the photostable composition according to the invention actively contributed therefore to additionally limit the enviromental impact connected with the cultivation of the treated plants themselves. The application of the presently claimed compositions as a fertiliser does however not form part of the claimed methods and uses.

In the context of the present application, the expression
- "pyrethrin I" indicates [(1S)-2-methyl-4-oxo-3-[(2Z)-penta-2,4-dienyl]cyclopent-2-en-1-yl] (1R,3R)-2,2-dimethyl-3-(2-methylprop-1-enyl)cyclopropane-1-carboxylate [cas number 121-21-1];
- "pyrethrin II" indicates ([(1S)-2-methyl-4-oxo-3-[(2Z)-penta-2,4-dienyl]cyclopent-2-en-1-yl](1R,3R)-3-[(E)-3-methoxy-2-methyl-3-oxoprop-1-enyl]-2,2-dimethylcyclopropane-1-carboxylate [cas number 121-29-9];
- "cinerin I" indicates [(1S)-3-[(Z)-but-2-enyl]-2-methyl-4-oxocyclopent-2-en-1-yl] (1R,3R)-2,2-dimethyl-3-(2-methylprop-1-enyl)cyclopropane-1-carboxylate[cas number 25402-06-6];
- "cinerin II" indicates [(1S)-3-[(Z)-but-2-enyl]-2-methyl-4-oxocyclopent-2-en-1-yl] (1R,3R)-3-[(E)-3-methoxy-2-methyl-3-oxoprop-1-enyl]-2,2-dimethylcyclopropane-1-carboxylate [cas number 121-20-0];
- "jasmolin I" indicates [(1S)-2-methyl-4-oxo-3-[(Z)-pent-2-enyl]cyclopent-2-en-1-yl] (1R,3R)-2,2-dimethyl-3-(2-methylprop-1-enyl)cyclopropane-1-carboxylate [cas number 4466-14-2];
- "jasmolin II" indicates [(1S)-2-methyl-4-oxo-3-[(Z)-pent-2-enyl]cyclopent-2-en-1-yl] (1R,3R)-3-[(E)-3-methoxy-2-methyl-3-oxoprop-1-enyl]-2,2-dimethylcyclopropane-1-carboxylate [cas number 1172-63-0];

- "pyrethrum" indicates the vegetable extract from plants of Chrysanthemum or Tanacetum genus, obtained with suitable solvents such as, for example, light petroleum ether, isoparaffins, methanol, ethanol, solvent oils (pyrethrum botanical extract) or by using supercritical carbon dioxide. The term pyrethrum extract comprise also dried and powdered vegetable from the a.m. plants;
- "pyrethrin" or "pyrethrins" indicates singularly or collectively a class of organic compounds naturally contained in pyrethrum extracts. Pyrethrin I, pyrethrin II, cinerine I, cinerine II, jasmoline I, and jasmoline II are pyrethrins contained in Chrysantemum ot Tanacetum genus; and
- "extract" referred to a plant indicates an extract of any part of said plant, including its flowers, leaves, stems.

Within the framework of the present description and in the subsequent claims, except where otherwise indicated, all the numerical entities expressing amounts, parameters, percentages, and so forth, are to be understood as being preceded in all instances by the term "about". Also, all ranges of numerical entities include all the possible combinations of the maximum and minimum values and include all the possible intermediate ranges, in addition to those specifically indicated herein below.

The present invention may present in one or more of the above aspects one or more of the characteristics disclosed hereinafter.

The photostable composition according to the present invention comprises a carbonate substituted hydroxyapatite having the formula (I):

Ca_{(10-y/2)}(PO₄)_{(6-y)}(CO₃)_{y}(OH)₂ (I)

wherein y is comprised between 0.01 and 2.

Preferably, y is comprised between 0.1 and 1.2 more preferably between 0.2 and 0.8.

Preferably, the photostable composition according to the invention comprises, with respect to the weight of the photostable composition, from 2% to 60 % by weight, more preferably from 5% to 30% by weight, and optimally about 20% by weight of said carbonate substituted hydroxyapatite.

Preferably, said carbonate substituted hydroxyapatite has a crystallinity degree comprised between 25 % and 59%, more preferably between 25 % and 40%.

Said crystallinity degree may be determined by XRD measures as in Landi E., J. Europ. Ceramic Soc. 23(2003),2931-2937.

Preferably, the quantity of said at least one vegetable extract of at least one plant of the Chrysanthemum or Tanacetum genus in the photostable composition according to the invention is comprised, with respect to the weight of the carbonate substituted hydroxyaptite, from 0.01 to 50% by weight, more preferably from 0.5 to 30 % by weight, even more preferably from 1 to 20% by weight.

Preferably, said at least one vegetable extract is of at least one plant selected from the group consisting of: Chrysanthemum cinerariaefolium, Tanacetum cinerariaefolium, Chrysanthemum coccineum, Chrysanthemum balsamita, Chrysanthemum roseum and Chrysanthemum marshall, more preferably is Chrysanthemum cinerariifolium.

Vegetable extracts of at least one plant of the Chrysanthemum or Tanacetum genus are known and available on the market. Examples of vegetable extracts of plants of the Chrysanthemum or Tanacetum genus suitable for the present invention are for example sold by international suppliers, and may be obtained by any method known to the skilled person, for example by means of the method disclosed by Maciver, D.R. in "Pyrethrum Flowers Production, Chemistry, Toxicology and Uses", Editor J. E. Casida and G.B. Quistad, Oxford University Press 1995, page 108-122.

Preferably, said at least one vegetable extract comprises at least one active component selected from the group consisting of: pyrethrin I, pyrethrin II, cinerine I, cinerine II, jasmoline I, or jasmoline II.

Preferably, said at least one vegetable extract comprises, with respect to the weight of the vegetable extract, from 20% to 80 % by weight, more preferably from 30 % to 70% by weight, even more preferably from 40 % to 70% by weight, of said at least one active component.

In a preferred embodiment, said at least one vegetable extract comprises about 60 % by weight of said at least one active component.

In a further preferred embodiment, said at least one vegetable extract comprises about 70 % by weight of said at least one active component.

Preferably, the vegetable extract of at least one plant of the Chrysanthemum or Tanacetum genus is an organic solvent extract or a supercritical CO₂ extract. Suitable organic solvents for vegetable extracts of plants of the Chrysanthemum or Tanacetum genus according to the present invention are, for example, petroleum ether, isoparaffins, in particular C13-C14 isoparaffin, or vegetable oils.

Preferably, the photostable composition according to the present invention comprises at least one bioactive compound selected from the group consisting of: an aromatic plant extract, a metal ion, or a carboxylic acid selected from the group consisting of: a C₉-C₂₂ saturated or unsaturated fatty acid, a C₃-C₈ saturated acid, a salt thereof, or a derivative thereof.

Preferably, the photostable composition according to the present invention comprises, with respect to the weight of the carbonate substituted hydroxyapatite, from 0.01 to 25% by weight, more preferably from 1% to 15 % by weight, of said aromatic plant extract.

Preferably, said aromatic plant extractis selected from the group consisting of extracts of Abies sibirica, Malpighia glabra, Achillea millefolium, Allium sativum, Medicago sativa, Aloe vera, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Glycine max, Glycyrrhiza glabra, Gentiana lutea, Lavandula angustifolia, Linen seed, Melilotus officinalis, Melissa officinalis, Punica granatum, Mentha piperita, Vaccinium myrtillus, Origanum vulgaris, Orthosiphon stamineus, Urtica dioica, Olea europeae, Tabebuia impetiginosa, Plantago lanceolata, Hieracium pilosella, Pinus sibirica, Polypodium leucotoms, Citrus lemon, Citrus sinensis, Citrus paradisi, Quassia amara, Rheum Thais, Rosa canina, Rosmarinus officinalis, Ruscus aculeatus, Salix alba, Salvia officinalis, Salvia rosmarinus, Sesamus indicum,Camelia sinensis, Tilia tomentosa, Thymus vulgaris, Arctostaphylos uva-ursi, Valeriana officinalis, Solidago virgaurea, Loranthus europaeus, Zingiber officinalis.

Preferably, said aromatic plant extract is selected from the group consisting of extracts of Mentha piperita, Thymus vulgaris, Salvia officinalis, Rosmarinus officinalis, Sesamus indicum, Syzygium aromaticum, Allium sativum, Citrus lemon, Cinnamomum verum, Origanum vulgaris, separately or in mixture.

Preferably, said aromatic plant extract may be used for the preparation of the photostable composition according to the present invention, in powder form or as a hydroalcoholic extract.

Preferably, the photostable composition according to the present invention comprises, with respect to the weight of the carbonate substituted hydroxyaptite, from 0.01 to 15% by weight, more preferably from 0.5% to 3% by weight, of said metal ion.

Preferably, said metal ion is selected from the group consisting of: Mg, Zn, B, K, Fe, or Mn, more preferably is selected from the group consisting of: Zn, B, Mn, Fe. Even more preferably, said metal ion is Zn.

Preferably, the photostable composition according to the present invention comprises, with respect to the weight of the carbonate substituted hydroxyaptite, from 0.01 to 80% by weight, more preferably from 10% to 60% by weight, of said carboxylic acid.

Preferably, said carboxylic acid is selected from the group consisting of: Propionic acid, Butirric acid, Caprylic acid, Capric acid, Lauric acid, Myristic acid, Palmitic acid, Stearic acid, Oleic acid, Linoleic acid, Linolenic acid, Arachidonic acid, Beheric acid, their sodium, potassium, calcium, glycine salts, their monoglycerides, diglycerides, triglycerides or their mixtures. More preferably, said carboxylic acid is selected from the group consisting of: propionic acid, butirric acid, linoleic acid, linolenic acid, oleic acid as well as their potassium salts, their monoglycerides and diglycerides.

Preferably, the photostable composition according to the present invention comprises at least one further component selected from the group consisting of: a surfactant, a dispersant, a thickener, a pH modifier, an anti-freezing agent, an anti-mould agent, an antioxidant agent, a synergist, a sexual pheromone, a kairomone.

Preferably, said at least one further component is present in an amount comprised between 0.1 % and 10% by weight, with respect to the total weight of the photostable composition.

Preferably, said surfactant is selected from the group consisting of: anionic surfactant or non-ionic surfactant. Said anionic surfactant is preferably selected from the group consisting of dodecylbenzenesulphonate and sodium lauryl sarcosinate. Said non-ionic surfactant is preferably selected from the group consisting of ethoxylated tristyrilphenol, ethoxylated fatty alcohol, decyl octyl glicosides.

Preferably, said dispersant is sodium ligninsulphonate.

Preferably, said thickener is xanthan gum.

Preferably, said pH modifier is citric acid
Preferably, said anti-freezing agent is propylene glycol.

Preferably, said anti-mould agent is benzoisothiazolinone.

Preferably, said antioxidant agent is butyl hydroxy toluene (BHT).

Preferably, said synergist is piperonyl butoxide.

In a further aspect, the present invention relates also to a photostable composition comprising a carbonate substituted hydroxyapatite having the formula (I):

Ca_{(10-y/2)}(PO₄)_{(6-y)}(CO₃)_{y}(OH)₂ (I)

wherein y is comprised between 0.01 and 2; and
at least one active component selected from the group consisting of: pyrethrin I, pyrethrin II, cinerine I, cinerine II, jasmoline I, orjasmoline II.

The advantages and preferred characteristics of the photostable composition according to this further aspect have been already outlined with reference to the above photostable composition according to the first aspect of the invention and are not repeated herewith. In this regard, the Applicant has additionally found out that the carbonate substituted hydroxyapatite of formula (I) above is particularly and even more markedly effective in photostabilizing active components selected from the group consisting of: pyrethrin I, pyrethrin II, cinerine I, cinerine II, jasmoline I, orjasmoline II, capable of providing an insecticide activity on plants.

In further aspects, the present invention relate salso to a non-therapeutic use of any one of the photostable compositions according to the invention, as insecticide or bacteria in closed or open environment, and to a method for controlling insects or bacteria, comprising the step of treating a substrate requiring treatment with any one of the photostable compositions according to the invention.

The advantages of this non-therapeutic use and of this method have been already outlined with reference to and are apparent considering the above photostable composition according to the first aspect of the invention and are not repeated herewith.

In the method for controlling insects or bacteria, comprising the step of treating a substrate requiring treatment with any one of the photostable compositions according to the invention said substrate is preferably a plant.

Preferably, said step of treating comprises spraying said photostable composition on said substrate.

Further features and advantages of the invention will appear more clearly from the following description of some preferred embodiments thereof, made hereinafter by way of a non-limiting example with reference to the following exemplary examples.

### EXPERIMENTAL PART

### Example 1 (Reference)

### Preparation of carbonate substituted hydroxypatite

The carbonate substituted hydroxyapatite was prepared by mixing 350 g of an aqueous solution of phosphoric acid (obtained from 200 g of phosphoric acid 75% (% w/w) and 150 g of water) and 210 g of a mixture formed by calcium hydroxide (190 g) and calcium carbonate (20g) previously dispersed in 440 ml of water. The reaction required 36 hours.

### Example 2 (Reference)

### Preparation of carbonate substituted hydroxyapatite loaded with zinc ions

20 parts by weight of a suspension formed by a 30% (w/w) aqueous suspension of the carbonate substituted hydroxyapatite prepared according to Example 1, was added with 30 parts by weight of a 9 % (%w/w) aqueous solution of zinc sulfate monohydrate. 50 parts by weight of water were then added, keeping the suspension under stirring for 10 minutes. The total amount of Zn, expressed as zinc ion wasof 1.2% of the total weight of the suspension.

### Reference Example 3 (Reference)

### Preparation of carbonate substituted hydroxyapatite loaded with plant extract

20 parts by weight of a suspension formed by a 30% (% w/w) aqueous suspensions of carbonate substituted hydroxyapatite prepared according to Example 1 were mixed with 20 parts by weight of a 22% (% w/w) ethanol solution containing a mixture of aromatic plant extracts consisting of: 30 % by weight of mint extract, 26 %by weight of rosemary extract, 15 % by weight of anise extract, 4 % by weight lemon extract, 1 % by weight garlic extract, 18% by weight of clove extract, 3% by weight of thyme extract, and 3 % by weight of cinnamon extract. All theseextracts were commercially available from Calliero S.p.A., Italy.

The suspension was then kept under stirring for 15 minutes.

60 parts by weight of water were then added keeping the suspensions under stirring for 10 minutes. The total amount of vegetal extracts was 4.4 % (% w /w) of the total weight of the suspension.

### Example 4

### Preparation of carbonate substituted hydroxyapatite loaded with pyrethrum extract

20 parts by weight of a suspension formed by a 30% (% w/w) aqueous suspension of carbonate substituted hydroxyapatite prepared according to Manufacturing Example 1 were mixed with 20 parts by weight of 25% (% w/w) ethanol solution of pyrethrum extract obtained by mixing the pyrethrum extract (50% by weight in isoparaffin) obtained as reported by Maciver, D.R. (Pyrethrum Flowers Production, Chemistry, Toxicology and Uses", Editor J. E. Casida and G.B. Quistad, Oxford University Press 1995,page 108-122) and ethanol 1:1 (w:w). The thus obtained suspension was then kept under stirring for 15 minutes. 60 parts by weight of water were then added, keeping the suspension under stirring for 10 minutes. The total amount of pyrethrum extract was 1.3 % (% w /w) of the total weight of the suspension.

### Example 5

### Preparation of carbonate substituted hydroxyapatite loaded with pyrethrum extract and a mixture of aromatic plant extracts

20 parts by weight of a suspension formed by a 30% (% w/w) aqueous suspension of carbonate substituted hydroxyapatite prepared according to Manufacturing Example 1 were mixed with 20 parts by weight of a 22% (% w/w) ethanol solution containing a mixture of aromatic plant extracts consisting of: 30 % by weight of mint extract, 26 %by weight of rosemary extract, 15 % by weight of anise extract, 4 % by weight lemon extract, 1 % by weight garlic extract, 18% by weight of clove extract, 3% by weight of thyme extract, and 3 % by weight of cinnamon extract. All these extracts were commercially available from Calliero S.p.A., Italy.

The suspension was then kept under stirring for 15 minutes.

25 parts by weight of an ethanol solution of pyrethrum extract obtained by mixing a pyrethrum extract (50% by weight in isoparaffins) obtained as reported by Maciver, D.R. (Pyrethrum Flowers Production, Chemistry, Toxicology and Uses", Editor J. E. Casida and G.B. Quistad, Oxford University Press 1995, page 108-122) and ethanol 1:1 (w:w) were then added and the total suspension was then stirred for 30 minutes.

35 parts by weight of water were then added keeping the suspension under stirring for 15 minutes. The total amount of pyrethrum extract was 1.3% of the total weight suspension and the total amount of vegetal extract was 4.4 % (% w /w) of the total weight of the suspension.

### Example 6 (Reference)

### Preparation of carbonate substituted hydroxyapatite loaded with zinc ions and propionic acid monoglyceride

30 parts by weight of the aqueous suspension of carbonate substituted hydroxyapatite prepared according to Example 1, 30 parts by weight of a 9 % (%w/w) aqueous solution of zinc sulfate monohydrate, and 20 parts by weight of a 25% (% w/w) ethanol solution of propionic acid monglyceride were mixed.

20 parts by weight of water were then added, keeping the suspension under stirring for 10 minutes. The total amount of Zn, expressed as zinc ion was 1.2% of the total weight of the suspension and the total amount of propionic acid monoglyceride is 5% of the total weight of the suspension

### Example 7

### Preparation of carbonate substituted hydroxyapatite loaded with zinc ions, propionic acid monoglyceride and pyrethrum extract

20 parts by weight of a suspension formed by a 30% (w/w) aqueous suspension of carbonate substituted hydroxyapatite prepared according to Example 1 were mixed with 30 parts by weight of a 9 % (%w/w) aqueous solution of zinc sulfate monohydrate, 20 parts by weight of a 25% (% w/w) ethanol solution of propionic acid monoglyceride and 25% (% w/w) ethanol solution of pyrethrum extract (50% by weight in petroleum ether) obtained as reported by Maciver, D.R. (Pyrethrum Flowers Production, Chemistry, Toxicology and Uses", Editor J. E. Casida and G.B. Quistad, Oxford University Press 1995, page 108-122) and ethanol 1:1 (w:w) was added.

30 parts by weight of water were then added, keeping the suspension under stirring for 20 minutes. The total amount of Zn, expressed as zinc ion was 1.2% of the total weight of the suspension, the total amount of propionic acid monoglyceride is 5% of the total weight of the suspension and the total amount of pyrethrum extract was 1.25% of the total weight suspension.

### Comparison Example 1

### Preparation of a solution of pyrethrum extract 0.65% (w/w)

30 parts in weight of Pyrethrum extract (50% in isoparaffins) obtained as reported by Maciver, D.R. (Pyrethrum Flowers Production, Chemistry, Toxicology and Uses", Editor J. E. Casida and G.B. Quistad, Oxford University Press 1995, page 108-122) were added with 470 parts in weight of ethanol obtaining 500 g of the total solution containing 3% (w/w) of pyrethrum extract. 110 parts in weight of the solution were then added with 390 parts in weight of ethanol obtaining 500 g of a solution containing 0.65% (w/w) of pyrethrum extract.

### Comparison Example 2

### Preparation of a solution of pyrethrum extract 0.65% (w/w) and of a mixture of aromatic plant extracts

50 parts in weight of Pyrethrum extract (50% in petroleum ether) obtained as reported by Maciver, D.R. (Pyrethrum Flowers Production, Chemistry, Toxicology and Uses", Editor J. E. Casida and G.B. Quistad, Oxford University Press 1995, page 108-122) were added with 470 parts in weight of ethanol obtaining 500 g of the total solution containing 3% (w/w) of pyrethrum extract. 50 parts in weight of a 22% (% w/w) ethanol solution containing a mixture of plant extracts each commercially available from Calliero S.p.A., Italy consisting of: 30 % by weight of mint extract, 26 % by weight of rosemary extract, 15 % by weight of anise extract, 4 % by weight lemon extract, 1 % by weight garlic extract, 18% by weight of clove extrof the act, 3% by weight of thyme extract, and 3 % by weight of cinnamon extract was added to 110 parts in weight of the solution containing 3% (w/w) of pyrethrum extract. The total solution was then added with 340 parts in weight of ethanol obtaining 500 g of a solution containing 0.65% (w/w) of pyrethrum extract and 2.2% (w/w) of the above mentioned mixture of plant extracts.

### Comparison Example 3

### Preparation of a solution of pyrethrum extract 0.65%, Zn ion 0.6% and propionic acid monoglyceride 2.5%

30 parts in weight of Pyrethrum extract (50% in petroleum ether) obtained as reported by Maciver, D.R. (Pyrethrum Flowers Production, Chemistry, Toxicology and Uses", Editor J. E. Casida and G.B. Quistad, Oxford University Press 1995, page 108-122) were added with 470 parts in weight of ethanol obtaining 500 g of the total solution containing 3% (w/w) of pyrethrum extract. 40 parts by weight (% w/w) of a 9 % (%w/w) aqueous solution of zinc sulfate monohydrate and 50 parts by weight of a 25% (% w/w) ethanol solution of propionic acid monglyceride were added to 110 parts in weight of the solution containing 3% (w/w) of pyrethrum extract. The total solution was then added with 300 parts in weight of ethanol obtaining 500 g of a solution containing 0.65% (w/w) of pyrethrum extract, Zn ion 0.6% and propionic acid monoglyceride 2.5%.

### Example 8

### Insecticide activity of photostable composition containq pyrethrum extracts on Myzus persicae

40 adult individuals each of Myzus persicae were transferred on pea plants contained in six phytotrones containing three different conditioned chambers. The tests were carried out at 25°C and 40%RH with a 16/8 light dark cycle. After 1 day upon introduction, aphids were treated with the product of Example 4, 5 and 7 diluted in water so as to show a concentration of 0.65% by weight of the pyrethrum extract. Comparative tests were carried out at the same concentration of pyrethrum extract and with water as control, by using the compositions according to Comparison Examples 1-3.

The products were tested to evaluate the effectiveness of products containing carbonate substituted hydroxyapatite after 5, 10 and 15 days after treatment and exposure to normal light. All treatments were applied by using a sprinkle connected to a graduated cylinder to assure a constant and precise administration of the products. Table 1 reports the experimental data

**TABLE 1**

| Product from Example | Mortality % 5 days after spraying | Mortality % 10 days after spraying | Mortality % 15 days after spraying |
|---|---|---|---|
| 4 | 100 | 92 | 89 |
| 5 | 100 | 95 | 88 |
| 7 | 100 | 91 | 88 |
| Comparison Example 1 | 95 | 70 | 61 |
| Comparison Example 2 | 93 | 72 | 59 |
| Comparison Example 3 | 89 | 69 | 59 |
| Control (water) | 3 | 3 | 8 |

From the data obtained it was observed that the suspensions according to the invention showed remarkably higher efficacy in terms of mortality as insecticides.

## Claims

1. A photostable composition comprising:
a carbonate substituted hydroxyapatite having the formula (I):
Ca_{(10-y/2)}(PO₄)_{(6-y)}(CO₃)_{y}(OH)₂ (I)
wherein y is comprised between 0.01 and 2; and
at least one vegetable extract of at least one plant of the Chrysanthemum or Tanacetum genus.

2. The photostable composition according to claim 1, comprising from 2% to 60 % by weight, with respect to the weight of the photostable composition, of said carbonate substituted hydroxyapatite.

3. The photostable composition according to any one of claims 1 to 2, comprising from 0.01 to 50% by weight, with respect to the weight of the carbonate substituted hydroxyapatite of said at least one vegetal extract.

4. The photostable composition according to any one of claims 1 to 3, wherein said at least one vegetable extract is of at least one plant selected from the group consisting of: Chrysanthemum cinerariaefolium, Tanacetum cinerariaefolium, Chrysanthemum coccineum, Chrysanthemum balsamita, Chrysanthemum roseum and Chrysanthemum marshall.

5. The photostable composition according to any one of claims 1 to 4, wherein said at least one vegetable extract comprises at least one active component selected from the group consisting of: pyrethrin I, pyrethrin II, cinerine I, cinerine II, jasmoline I, or jasmoline II.

6. The photostable composition according to any one of claims 1 to 5, wherein said composition comprises at least one bioactive compound selected from the group consisting of: an aromatic plant extract, a metal ion, or a carboxylic acid selected from the group consisting of: a C9-C22 saturated or unsaturated fatty acid, a C3-C8 saturated acid, a salt thereof, or a derivative thereof.

7. The photostable composition according to claim 6, comprising from 0.01 to 25% by weight, with respect to the weight of the carbonate substituted hydroxyaptite, of said aromatic plant extract.

8. The photostable composition according to claim 6 or 7, wherein said aromatic plant extract is selected from the group consisting of extracts of Abies sibirica, Malpighia glabra, Achillea millefolium, Allium sativum, Medicago sativa, Aloe vera, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Glycine max, Glycyrrhiza glabra, Gentiana lutea, Lavandula angustifolia, Linen seed, Melilotus officinalis, Melissa officinalis, Punica granatum, Mentha piperita, Vaccinium myrtillus, Origanum vulgaris, Orthosiphon stamineus, Urtica dioica, Olea europeae, Tabebuia impetiginosa, Plantago lanceolata, Hieracium pilosella, Pinus sibirica, Polypodium leucotoms, Citrus lemon, Citrus sinensis, Citrus paradisi, Quassia amara, Rheum Thais, Rosa canina, Rosmarinus officinalis, Ruscus aculeatus, Salix alba, Salvia officinalis, Salvia rosmarinus, Sesamus indicum, Camelia sinensis, Tilia tomentosa, Thymus vulgaris, Arctostaphylos uva-ursi, Valeriana officinalis, Solidago virgaurea, Loranthus europaeus, Zingiber officinalis.

9. The photostable composition according to any one of claims 6 to 8, comprising from 0.01 to 15% by weight, with respect to the weight of the carbonate substituted hydroxyapatite, of said metal ion.

10. The photostable composition according to any one of claims 6 to 9, wherein said metal ion is selected from the group consisting of: Mg, Zn, B, K, Fe, or Mn.

11. The photostable composition according to any one of claims 6 to 10, comprising from 0.01 to 80% by weight, with respect to the weight of the carbonate substituted hydroxyapatite, of said carboxylic acid.

12. The photostable composition according to any one of claims 6 to 11, wherein said carboxylic acid is selected from the group consisting of: Propionic acid, Butirric acid, Caprylic acid, Capric acid, Lauric acid, Myristic acid, Palmitic acid, Stearic acid, Oleic acid, Linoleic acid, Linolenic acid, Arachidonic acid, Beheric acid, their sodium, potassium, calcium, glycine salts, their monoglycerides, diglycerides, triglycerides or their mixtures.

13. A photostable composition comprising a carbonate substituted hydroxyapatite having the formula (I):
Ca_{(10-y/2)}(PO₄)_{(6-y)}(CO₃)_{y}(OH)₂ (I)
wherein y is comprised between 0.01 and 2; and
at least one active component selected from the group consisting of: pyrethrin I, pyrethrin II, cinerine I, cinerine II, jasmoline I, orjasmoline II.

14. A non-therapeutic use of the photostable composition according to any one of claims 1 to 13, as insecticide or bactericide in closed or open environment.

15. A non-therapeutic method for controlling insects or bacteria, comprising the step of treating a substrate requiring treatment with the photostable composition according to according to any one of claims 1 to 13.

16. The method according to claim 15, wherein said substrate is a plant.

17. The method according to claim 15 or 16, wherein said step of treating comprises spraying said photostable composition on said substrate.

## Patentansprüche

1. Photostabile Zusammensetzung, umfassend:
einen carbonatsubstituierten Hydroxylapatit mit der Formel (I):
Ca_{(10-y/2)}(PO₄)_{(6-y)}(CO₃)_{y}(OH)₂ (I)
wobei y zwischen 0,01 und 2 liegt; und
mindestens einen pflanzlichen Extrakt von mindestens einer Pflanze der Gattung Chrysanthemum oder Tanacetum.

2. Photostabile Zusammensetzung nach Anspruch 1, die von 2 Gew.-% bis 60 Gew.-%, bezogen auf das Gewicht der photostabilen Zusammensetzung, des carbonatsubstituierten Hydroxylapatits umfasst.

3. Photostabile Zusammensetzung nach einem der Ansprüche 1 bis 2, die von 0,01 Gew.-% bis 50 Gew.-%, bezogen auf das Gewicht des carbonatsubstituierten Hydroxylapatits, des mindestens einen pflanzlichen Extrakts umfasst.

4. Photostabile Zusammensetzung nach einem der Ansprüche 1 bis 3, wobei der mindestens eine pflanzliche Extrakt von mindestens einer Pflanze stammt, ausgewählt aus der Gruppe, bestehend aus: Chrysanthemum cinerariaefolium, Tanacetum cinerariaefolium, Chrysanthemum coccineum, Chrysanthemum balsamita, Chrysanthemum roseum und Chrysanthemum marshall.

5. Photostabile Zusammensetzung nach einem der Ansprüche 1 bis 4, wobei der mindestens eine pflanzliche Extrakt mindestens einen Wirkstoff umfasst, ausgewählt aus der Gruppe, bestehend aus: Pyrethrin I, Pyrethrin II, Cinerin I, Cinerin II, Jasmolin I oder Jasmolin II.

6. Photostabile Zusammensetzung nach einem der Ansprüche 1 bis 5, wobei die Zusammensetzung mindestens eine bioaktive Verbindung umfasst, ausgewählt aus der Gruppe, bestehend aus: einem aromatischen Pflanzenextrakt, einem Metallion oder einer Carbonsäure, ausgewählt aus der Gruppe, bestehend aus: einer gesättigten oder ungesättigten C9-C22-Fettsäure, einer gesättigten C3-C8-Säure, einem Salz davon oder einem Derivat davon.

7. Photostabile Zusammensetzung nach Anspruch 6, die von 0,01 Gew.-% bis 25 Gew.-%, bezogen auf das Gewicht des carbonatsubstituierten Hydroxylapatits, des aromatischen Pflanzenextrakts umfasst.

8. Photostabile Zusammensetzung nach Anspruch 6 oder 7, wobei der aromatische Pflanzenextrakt aus der Gruppe ausgewählt ist, bestehend aus Extrakten von Abies sibirica, Malpighia glabra, Achillea millefolium, Allium sativum, Medicago sativa, Aloe vera, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Glycine max, Glycyrrhiza glabra, Gentiana lutea, Lavandula angustifolia, Leinsamen, Melilotus officinalis, Melissa officinalis, Punica granatum, Mentha piperita, Vaccinium myrtillus, Origanum vulgaris, Orthosiphon stamineus, Urtica dioica, Olea europeae, Tabebuia impetiginosa, Plantago lanceolata, Hieracium pilosella, Pinus sibirica, Polypodium leucotoms, Citrus lemon, Citrus sinensis, Citrus paradisi, Quassia amara, Rheum Thais, Rosa canina, Rosmarinus officinalis, Ruscus aculeatus, Salix alba, Salvia officinalis, Salvia rosmarinus, Sesamus indicum, Camelia sinensis, Tilia tomentosa, Thymus vulgaris, Arctostaphylos uva-ursi, Valeriana officinalis, Solidago virgaurea, Loranthus europaeus, Zingiber officinalis.

9. Photostabile Zusammensetzung nach einem der Ansprüche 6 bis 8, die von 0,01 Gew.-% bis 15 Gew.-%, bezogen auf das Gewicht des carbonatsubstituierten Hydroxylapatits, des Metallions umfasst.

10. Photostabile Zusammensetzung nach einem der Ansprüche 6 bis 9, wobei das mindestens eine Metallion aus der Gruppe ausgewählt ist, bestehend aus: Mg, Zn, B, K, Fe oder Mn.

11. Photostabile Zusammensetzung nach einem der Ansprüche 6 bis 10, die von 0,01 Gew.-% bis 80 Gew.-%, bezogen auf das Gewicht des carbonatsubstituierten Hydroxylapatits, der Carbonsäure umfasst.

12. Photostabile Zusammensetzung nach einem der Ansprüche 6 bis 11, wobei die Carbonsäure aus der Gruppe ausgewählt ist, bestehend aus: Propionsäure, Buttersäure, Caprylsäure, Caprinsäure, Laurinsäure, Myristinsäure, Palmitinsäure, Stearinsäure, Ölsäure, Linolsäure, Linolensäure, Arachidonsäure, Behensäure, deren Natrium-, Kalium-, Calcium-, Glycinsalze, deren Monoglyceride, Diglyceride, Triglyceride oder deren Gemischen.

13. Photostabile Zusammensetzung, umfassend einen carbonatsubstituierten Hydroxylapatit mit der Formel (I):
Ca_{(10y/2)}(PO₄)_{(6-y)}(CO₃)_{y}(OH)₂ (I)
wobei y zwischen 0,01 und 2 liegt; und
mindestens einen Wirkstoff, ausgewählt aus der Gruppe, bestehend aus: Pyrethrin I, Pyrethrin II, Cinerin I, Cinerin II, Jasmolin I oder Jasmolin II.

14. Nicht-therapeutische Verwendung der photostabilen Zusammensetzung nach einem der Ansprüche 1 bis 13 als Insektizid oder Bakterizid in geschlossener und offener Umgebung.

15. Nicht-therapeutisches Verfahren zur Bekämpfung von Insekten oder Bakterien, umfassend den Schritt des Behandelns eines Substrats, das eine Behandlung benötigt, mit der photostabilen Zusammensetzung nach einem der Ansprüche 1 bis 13.

16. Verfahren nach Anspruch 15, wobei das Substrat eine Pflanze ist.

17. Verfahren nach Anspruch 15 oder 16, wobei der Schritt des Behandelns das Sprühen der photostabilen Zusammensetzung auf das Substrat umfasst.

## Revendications

1. Composition photostable comprenant :
une hydroxyapatite substituée par carbonate avec formule (I) :
Ca_{(10-y/2)}(PO₄)_{(6-y)}(CO₃)_{y}(OH)₂ (1)
où y est compris entre 0,01 et 2 ; et
au moins un extrait végétal d'au moins une plante du genre Chrysanthemum ou Tanacetum.

2. Composition photostable selon la revendication 1, comprenant de 2 % à 60 % en poids, par rapport au poids de la composition photostable, de ladite hydroxyapatite substituée par carbonate.

3. Composition photostable selon l'une quelconque des revendications 1 à 2, comprenant de 0,01 à 50 % en poids, par rapport au poids de l'hydroxyapatite substituée par carbonate dudit au moins un extrait végétal.

4. Composition photostable selon l'une quelconque des revendications 1 à 3, dans laquelle ledit au moins un extrait végétal est d'au moins une plante choisie dans le groupe constitué par : Chrysanthemum cinerariaefolium, Tanacetum cinerariaefolium, Chrysanthemum coccineum, Chrysanthemum balsamita, Chrysanthemum roseum et Chrysanthemum marshall.

5. Composition photostable selon l'une quelconque des revendications 1 à 4, dans laquelle ledit au moins un extrait végétal comprend au moins un composant actif choisi dans le groupe constitué par : la pyréthrine I, la pyréthrine II, la cinérine I, la cinérine II, la jasmoline I ou la jasmoline II.

6. Composition photostable selon l'une quelconque des revendications 1 à 5, dans laquelle ladite composition comprend au moins un composé bioactif choisi dans le groupe constitué par : un extrait de plante aromatique, un ion métallique ou un acide carboxylique choisi dans le groupe constitué par : un acide gras saturé ou insaturé en C9-C22, un acide saturé en C3-C8, un sel de celui-ci ou un dérivé de celui-ci.

7. Composition photostable selon la revendication 6, comprenant de 0,01 à 25 % en poids, par rapport au poids de l'hydroxyapatite substituée par carbonate, dudit extrait de plante aromatique.

8. Composition photostable selon la revendication 6 ou 7, dans lequel ledit extrait de plante aromatique est choisi dans le groupe constitué par les extraits d'Abies sibirica, Malpighia glabra, Achillea millefolium, Allium sativum, Medicago sativa, Aloe vera, Artemisia annua, Arnica Montana, Ocimum basilicum, Betula pendula, Betula pubescens, Calendula officinalis, Matricaria chamomilla, Chamaemelum nobile, Cinnamomum verum, Centella asiatica, Chelidonium majus, Syzygium aromaticum, Allium cepa, Equisetum arvense, Curcuma longa, Echinacea purpurea, Echinacea angustifolia, Eucalyptus globulus, Hypericum perforatum, Fucus vesiculosus, Glycine max, Glycyrrhiza glabra, Gentiana lutea, Lavandula angustifolia, Graines de lin, Melilotus officinalis, Melissa officinalis, Punica granatum, Mentha piperita, Vaccinium myrtillus, Origanum vulgaris, Orthosiphon stamineus, Urtica dioica, Olea europeae, Tabebuia impetiginosa, Plantago lanceolata, Hieracium pilosella, Pinus sibirica, Polypodium leucotoms, Citrus limon, Citrus sinensis, Citrus paradisi, Quassia amara, Rheum Thaïs, Rosa canina, Rosmarinus officinalis, Ruscus aculeatus, Salix alba, Salvia officinalis, Salvia rosmarinus, Sesamus indicum, Camelia sinensis, Tilia tomentosa, Thymus vulgaris, Arctostaphylos uva-ursi, Valeriana officinalis, Solidago virgaurea, Loranthus europaeus, Zingiber officinalis.

9. Composition photostable selon l'une quelconque des revendications 6 à 8, comprenant de 0,01 à 15 % en poids, par rapport au poids de l'hydroxyapatite substituée par carbonate, dudit ion métallique.

10. Composition photostable selon l'une quelconque des revendications 6 à 9, dans laquelle ledit ion métallique est choisi dans le groupe constitué par : Mg, Zn, B, K, Fe ou Mn.

11. Composition photostable selon l'une quelconque des revendications 6 à 10, comprenant de 0,01 à 80 % en poids, par rapport au poids de l'hydroxyapatite substituée par carbonate, dudit acide carboxylique.

12. Composition photostable selon l'une quelconque des revendications 6 à 11, dans laquelle ledit acide carboxylique est choisi dans le groupe constitué par : l'acide propionique, l'acide butirrique, l'acide caprylique, l'acide caprique, l'acide laurique, l'acide myristique, l'acide palmitique, l'acide stéarique, l'acide oléique, l'acide linoléique, l'acide linolénique, l'acide arachidonique, l'acide béhérique, leurs sels de sodium, potassium, calcium, glycine, leurs monoglycérides, diglycérides, triglycérides ou leurs mélanges.

13. Composition photostable comprenant une hydroxyapatite substituée par carbonate de formule (I) :
Ca_{(10-y/2)}(PO₄)_{(6-y)}(CO₃)_{y}(OH)₂ (1)
où y est compris entre 0,01 et 2 ; et
au moins un composant actif choisi dans le groupe constitué par : la pyréthrine I, la pyréthrine II, la cinérine I, la cinérine II, la jasmoline I ou la jasmoline II.

14. Utilisation non thérapeutique de la composition photostable selon l'une quelconque des revendications 1 à 13, comme insecticide ou bactéricide en milieu fermé ou ouvert.

15. Procédé non thérapeutique de lutte contre les insectes ou les bactéries, comprenant l'étape de traitement d'un substrat nécessitant un traitement avec la composition photostable selon l'une quelconque des revendications 1 à 13.

16. Procédé selon la revendication 15, dans lequel ledit substrat est une plante.

17. Procédé selon la revendication 15 ou 16, dans lequel ladite étape de traitement comprend la pulvérisation de ladite composition photostable sur ledit substrat.
